# EUROPEAN PATENT APPLICATION

(11) **EP 2 216 362 A1**
(43) Date of publication of application: **11.08.2010**
(21) Application number: 10152320.7
(22) Date of filing: 01.02.2010
(51) Int. Cl.: C08K 5/17, C08K 5/10, C08K 5/06

(54) **Polyolefin film compositions with permanent antifog properties, in particular for agro film applications and for packaging moist products**

(30) Priority: 06.02.2009 IT MI20090160
(71) Applicant: SABO S.r.l, 24040 Levate (BG) (IT)
(72) Inventor: Todesco, Roberto Vittorio Pietro, 4123, ALLSCHWIL (CH); Pievani, Ezio, 24020, SCANZOROSCIATE (BERGAMO) (IT); Vischetti, Alberto, 24040, STEZZANO (BERGAMO) (IT); Peverelli, Germano, 4102, BINNINGEN (CH)
(74) Representative: Petruzziello, Aldo

(57) **Abstract**

A polyolefin composition is described for preparing fog-resistant films for greenhouses and for packaging moist products, comprising an antistatic compound of formula 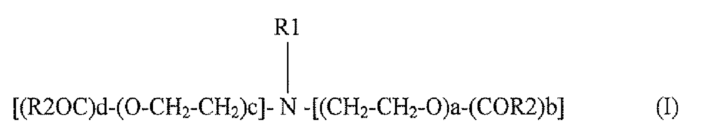 in which R1 is a C10-C20 group
a, c, equal or different from each other, vary from 1 to 2; b, d, equal or different from each other, vary from 0 to 1, the group (COR2) being replaced by an H atom when b or d is equal to 0, R2 is a C10-C20 group,
optionally combined with an additive based on an ethoxylated long chain alcohol or acid.

## Description

The present invention concerns fog-resistant polyolefin film compositions, in particular for agricultural use and for packaging moist products such as foodstuffs.

Films for agricultural use are widely used in greenhouse or tunnel culture and comprise mainly soft polymer films made from ethylene which are about 30 to 200 microns thick. Of the various properties required for agricultural films, particularly important are weather resistance, anti-fogging properties, heat-retaining properties and transparency. Today there is a demand for films that have also an extended lifetime before they have to be replaced.

The atmosphere within greenhouses or tunnels surrounded by agricultural film is saturated with vapour of water which evaporates from the soil or from the plants, and the water vapour condenses dropwise on the inner surface of the cold film to cause fogging. Water droplets on the film greatly reduce the incident sunlight due to irregular reflection and the droplets that fall on the plants can result in physical damage and/or frequent occurrences of diseases.

To avoid fogging, antifog treatments on the inner surface of agricultural film have been used. Today's state of the art of producing anti-fogging films is by incorporating typical antifog additives, such as sorbitan esters (e.g. Atmer® 103), polyglycerol esters (e.g. Atmer® 185, Sabo®fog TGS), ethoxylated sorbitan esters (e.g. Sabo®fog MSE) into the film in concentrations up to a few percent, mostly in varying combinations. By so doing, antifogging films are obtained with lifetimes of up to 1.5 years.

Also in the field of packaging moist products, to avoid fogging on the inside of the film additives are used which are able to maintain film transparency and good optical properties so as to make the product more attractive. The problem occurs mostly with food products such as meat, oven-baked products, vegetables, fruit and similar. In the current state of the art, films for the packaging of foodstuffs incorporate in the film composition typical antifog additives such as glycerol esters (e.g. Atmer 120, Atmer 1440), ethoxylated sorbitan esters (e.g. Atmer 116, Atmer 118) in concentrations of a few percent.

However the need for further improvement of the antifog properties and/or the duration of said properties, even more than one year of storage in the case of films for agriculture, avoiding the normal loss of transparency and sticking of the film to the product, is always felt in this sector, as well as the need to improve the antifog efficiency of the additive in the polyolefin polymer matrix.

The present invention concerns the use of a typical antistatic agent (e.g. Anstex SA 300, Sabostat A 300) to be added to a polymer matrix, preferably polyolefin one, for the preparation of antifog films for agricultural use or for food packaging, more particularly the use of the aforementioned agent combined with an ethoxylated long chain alcohol or acid to obtain films for agricultural use with long-lasting anti-fogging properties, generally more than 1.5 years, with exceptional clarity and performance.

A first object of this invention is polyolefin compositions with anti-fogging properties, for use as films in agricultural applications, comprising:
(A) at least one polyolefin;
(B) at least one compound of formula 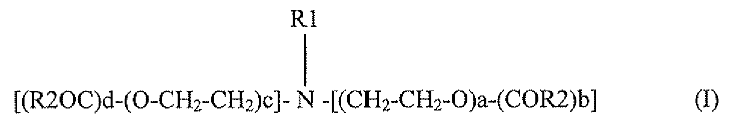 in which R1 is a C10-C20 group
   a, c, equal or different from each other, range from 1 to 2; b, d, equal or different from each other, range from 0 to 1
   with the condition that the sum (a+c) ranges from 2 to 4 and the sum (b+d) ranges from 1 to 2 and that when b or d is equal to 0, the absent group (COR2) is replaced by an H atom
   R2 is a C10-C20 group,
   and another compound selected from
(C) a compound of formula

   R3-O-(CH₂-CH₂-O)c-H (II)

   in which R3 is a linear or branched C 12-C24 group,
   c ranges from 1 to 20
   or
(D) a compound of formula

   R4-COO-(CH₂-CH₂-O)d-H (III)

   in which R4 is a C11-C23 group
   d ranges from 1 to 20.

The radical R1 may be a linear or branched hydrocarbon chain, saturated or unsaturated, optionally containing cyclic groups. Preferably R1 is a chain deriving from fatty acids, more preferably C16- C 18.

The radical R2 may be a linear or branched hydrocarbon chain, saturated or unsaturated, optionally containing cyclic groups, equal or different from R1. Preferably R2 is a C15-C17 group.

The group R3 may be a saturated or unsaturated hydrocarbon chain, optionally containing cyclic groups. Preferably R3 is a chain deriving from fatty acids, more preferably C20- C24.

The group R4 may be a linear or branched hydrocarbon chain, saturated or unsaturated, optionally containing cyclic groups. Preferably R4 is a chain deriving from fatty acids, more preferably C 15- C21.

Examples of polyolefins (A) usable for the formation of the film are polyethylene (LDPE, LLDPE), metallocene polyolefins, EVA polymers, EAA polymers and their combinations.

The antifog films of this invention for use in the agricultural field are prepared by producing a film from a formulation comprising a polyolefin that incorporates at least (B) a compound of the formula (I) in which R1 is a C10-C20 group, (a+c) is from 2 to 4, (b+d) is from 1 to 2, R2 is a C10-C20 group, and (C) a compound of the formula R3-O-(CH2-CH2-O)c-H in which R3 is C12-C24 (linear or branched), c varies from 1 to 20, or a compound (D) of the formula R4-COO-(CH2-CH2-O)d-H in which R4 is C11-C23, d varies from 1 to 20.

Preferably the additives (B) and (C) or (D) are added in appropriate quantities to pellets of a polyolefin into a suitable hot mixer, giving rise to granules. The granules thus obtained are then extruded by blowing so as to obtain films with the compositions of the present invention.

The compositions of the present invention may include, as additive (B), a mixture of different compounds of formula (I).

In a preferred embodiment, the compositions of the present invention include, for example, a compound (B) wherein R1 is C16-C18, (a+c) equal to 2, R2 is C15-C17, (b+d) being equal to 1-2, and a compound (C) wherein R3 is C22, c is equal to 3, or a compound (D) wherein R4 is C21, d being equal to 3.

In the above compositions according to the present invention the component (B) is present from about 0.1% to about 4%, the component (C) or (D) is present from about 0.1% to about 4%, with respect to the weight of the total composition, and the ratio of the component (B) to the component (C) or (D) varies in the range from 1 to 9 or from 9 to 1.

Preferably the polymer compositions of the present invention contain a total quantity of agents (B) and (C) or (B) and (D) included in the range varying from 0.5% to 3% in weight with respect to the total composition, with a preferred ratio of (B) to (C) or of (B) to (D) varying from 4 to 1.

The compositions as defined above may also include antifog additives chosen among sorbitan esters, alkoxylated phenols, mixtures of mono-, di- and tri-glycerides, fatty acids esters of polyhydroxy alcohols, and other polyalkoxylated compounds.

The compositions of the invention may optionally contain also various conventional stabilisers and co-additives, such as the materials listed here below, or their mixtures: antioxidants, light stabilisers such as HALS (NH, NOR or of the N-methyl type) or of Ni-Quencher type; UVA absorbers such as benzotriazole, benzophenone, oxyanilide or hydroxyphenyltriazine; phosphates or phosphonites; hydroxylamines and antiacids (stearates, oxides or hydrotalcites). Generally the quantity of these additives is less than or equal to 5% and greater than or equal to 0.05%, preferably from 0.1% to 3%.

Other usable quantities of additives vary from 0.1 to 5% or from about 0.05% to about 3% by weight.

Generally the thickness of said films for agricultural use may vary from 50 micron to 200 micron, though this is not a limitation for the purposes of the present invention.

A further object of the present invention is polyolefin compositions with anti-fogging properties, for use as films for packaging moist products, comprising:
(A) at least one polyolefin;
(B) at least one compound of formula 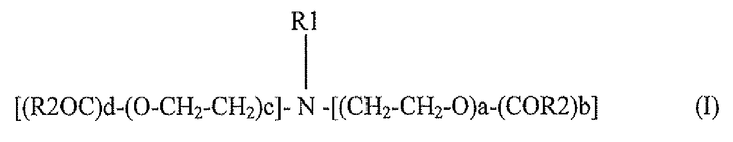
where R1, a, c, b, d, R2, are as defined above
with the condition that the sum (a+c) varies from 2 to 4 and the sum (b+d) varies from 1 to 2 and that when b or d is equal to 0, the absent group (COR2) is replaced by an H atom.

As polyolefins (A) usable for making films suitable for packaging moist products the ones listed above may be used and, in addition, also polypropylene (PP), or their combinations. Preferably, PP is used as a polyolefin in applications of this type, more preferably BOPP.

The resulting films may be formed of a single layer or of a plurality of layers. Generally the thickness of said films may vary from 5 micron to 50 micron, though this is not a limitation for the purposes of the present invention. The films for this use are made according to the known technique.

The preferred compound (B) for this use is the same one indicated above, with R1 being C16-C18, (a+c) equal to 2, R2 being from C15 to C 17, (b+d) being equal to 1-2.

Also in compositions of this type for packaging moist products the component (B) is present in quantities lower than 4% with respect to the weight of the total composition, preferably from about 0.1% to about 1.5%, more preferably between 0.5% and 0.9% with respect to the weight of the total composition.

Moreover also said type of compositions may contain, in addition, various conventional co-additives chosen among those mentioned previously, in particular antioxidants; phosphates or phosphonites; hydroxylamines and antiacids (stearates, oxides or hydrotalcites). Said co-additives are generally present altogether in quantities lower than 5% with respect to the weight of the total composition, preferably in quantities varying from 0.02% to 1%, for example from 0.1% to 1% or from about 0.02% to about 0.1% by weight, with respect to the weight of the total composition.

Moreover also films for packaging may further contain other antifog additives conventionally used in the sector, chosen among sorbitan esters, for example Sabofog MS (sorbitan stearate) or Atmer 116, Atmer 118 (ethoxylated sorbitan esters); alkoxylated phenols, mixtures of mono-, di- and tri-glycerides, fatty acid esters of polyhydroxy alcohols, for example glycerol esters such as Atmer 120, Atmer 1440, Sabofog TGS (polyglycerol stearate); and other polyalkoxylated compounds.

The quantity of said antifog additives may be substantially the same as indicated above for compound (B) of formula (I).

Films for packaging moist products are obtained following substantially the same procedure described above, then extruding the granules so as to obtain films suitable for packaging such as BOPP films using, for example, extruding and sheet stretching machines.

The Applicant has unexpectedly found that the antistatic agent (B) of formula (I) is able to impart antifog properties to films when added to the respective polymer matrix, particularly to the polyolefin matrix, and that these properties are generally improved with respect to those given by conventional antifog additives.

Moreover the Applicant has found that the use of said compound (B) combined with an ethoxylated long chain alcohol or acid (C) or (D) allows a further improvement of the antifog properties, obtaining polyolefin films for agricultural use having high and prolonged antifog properties comparable or even far superior to the use of conventional antifog additives, showing also a longer duration of said property.

The use of said antifog compound (B) is also advantageous from the point of view of mixing with the polymer matrix: in fact, as it is in solid form, rather than liquid or viscous, it is easier to handle and much easier to dose and mix with the polymer pellets.

The films of the present invention, both for agricultural use and for packaging moist products, may contain, in addition to the above-mentioned additives, other compounds generally used in the art of film preparation, for example the so-called slip agents.

Numerous variations and modifications of details may be made to the present embodiments of the invention, within the scope of a technician in the sector, but all within the field of the invention expressed by the attached claims.
The following examples illustrate the present invention without limitation.

### EXAMPLES

### Example 1

In order to evaluate the antifog properties of the claimed compounds for the formation of films for agricultural use, they were incorporated in LDPE films according to the following procedure: appropriate quantities of each compound are weighed and added to LDPE pellets (DowW 5031, supplied by Dow) characterised by a density of 0.923 g/cc and by a melt flow index of 1.9 dg/min, so as to obtain formulations containing a total quantity of additives (B) and (C) or (B) and (D) amounting to 1% or 2% in weight. The granules thus obtained were processed by blowing on a semi-industrial blowing extruder machine at a maximum temperature of 210°C, resulting in 200 micron films.

### The compounds used were the following:

### Sabofog TGS = antifog additive based on polyglycerol esters

Sabofog A 300 = antistatic additive based on of ethoxylated and then esterified amine corresponding to compound (B) with R1 being C16-C18, (a+c) equal to 2, R2 being from C15 to C 17, (b+d) being equal to 1-2

Sabofog Exp ale 22 = antifog additive based on a branched ethoxylated alcohol corresponding to compound (C) with R3 being C22, c being equal to 3,

Sabofog Exp aci 22 = antifog additive based on a linear ethoxylated acid corresponding to compound (D) with R4 being C21, d being equal to 3.

### Hot anti-fogging test method

The antifog property of greenhouse films was evaluated according to the hot fog test in order to simulate normal operative conditions: a 250 ml glass beaker, containing about 50 ml of water and covered with the film to be evaluated, is immersed to about half of its height in a water bath at 60°C.

The films are observed at defined intervals from the start of the experiment and a conventional notation of the observation is made ranging from A (an opaque layer of small fog droplets), B (an opaque layer of large fog droplets), C (a complete opaque layer of large transparent droplets), D (randomly scattered large transparent droplets), D/E (few small or large transparent droplets), E (a transparent film displaying no visible water). When the D/E evaluation of a film is reached, a note is made of the time elapsed from the start of the experiment.

The results are summarised in table 1.

**Table 1**

| Additive | Concentration % | Hours to observe D/E |
|---|---|---|
| None | | always worse |
| Sabo®fog TGS | 1 | 600 |
| Sabo®fog MS | 1 | 750 |
| A 300 | 1 | 1100 |
| A 300/TGS/MS (1:1:1) | 1 | 1050 |
| A300/ Sabo®fog Exp ale 22 (4:1) | 1 | 1500 |
| A300/ Sabo®fog Exp aci 22 (4:1) | 1 | 1300 |
| Sabo®fog TGS | 2 | 900 |
| Sabo®fog MS | 2 | 1100 |
| A 300 | 2 | 1700 |
| A 300/TGS/ MS (1:1:1) | 2 | 1650 |
| A3001 Sabo®fag Exp alc 22 (4:1) | 2 | 2900 |
| A300/ Sabo®fog Exp aci 22 (4:1) | 2 | 2700 |

From an examination of the data in the table it is clear that the antistatic additive A 300 shows antifog properties even greater than conventional antifog additives such as Saba®fog TGS, Sabo®fog MS. Moreover the antistatic agent A 300 (of formula I) also shows a synergic effect when used with the antifog agents (C) or (D).

In addition it should be noted that the use of the antistatic agent A 300 (of formula I) combined with the antifog agents gives an improvement of the antifog properties achieved by said known antifog agents.

### Example 2

In order to evaluate the antifog properties of the claimed compositions for the formation of films for packaging moist products, PP films were prepared containing the additive (B) according to the following procedure: appropriate quantities of the chosen compound (B) were added to pellets of PP (HC101BF supplied by Borealis) characterised by a melt flow index of 3.2 dg/min, so as to obtain formulations containing a quantity of additive (B) amounting to 0.8% in weight.
The granules thus obtained were transformed into BOPP film (Biaxially Oriented polypropylene) on a semi-industrial extrusion and sheet stretching machine for producing BOPP film, at a maximum temperature of 300°C, resulting in 30 micron films.

### The compounds used were the following:

Atmer 120 = conventional antifog additive for packaging films based on glycerol esters
Atmer 1440 = conventional antifog additive for packaging films based on glycerol esters
   Sabostat (Sabofog) A 300 = antistatic additive based on ethoxylated and then esterified amine corresponding to compound (B) with R1 being C16-C18, (a+c) equal to 2, R2 being from C15 to C 17, (b+d) being equal to 1-2 and corresponding to the compound previously named Sabofog A 300.
   During the formation of BOPP films containing the antistatic agent (B) of formula (I), Sabostat A 300, it was noted that less fumes developed than with other films containing conventional antifog additives.

### Cold anti-fogging test method

The antifog property of the films was evaluated according to the cold fog test in order to simulate normal operative conditions: a 250 ml glass beaker, containing about 50 ml of water was covered with the film to be evaluated and placed in a refrigerator at 4°C.

The films are observed at defined intervals from the start of the experiment and a conventional notation of the observation is made ranging from A (an opaque layer of small fog droplets), B (an opaque layer of large fog droplets), C (a complete opaque layer of large transparent droplets), D (randomly scattered large transparent droplets), D/E (few small or large transparent droplets), E (a transparent film displaying no visible water).

The results are summarised in table 2.

**Table 2**

| Additive | Concentration | Evaluation of the test results after: | | |
|---|---|---|---|---|
| | % | 30 minutes | 1 day | 1 week |
| None | --- | A | A | A |
| Atmer 20 | 1 | A | C | D |
| Atmer 1440 | 1 | D/E | D | D |
| Sabostat A300 | 0,8 | E | E | E |
| Sabostat A300 | 1 | E | E | E |

From an examination of the data in the table it is clear that the antistatic additive Sabostat A 300 exerts an improved and faster antifog action than the antifog additives conventionally used in BOPP films for packaging moist products.

Moreover the antistatic additive (B) allows exceptional transparency to be achieved and to be kept for longer periods than with the conventional antifog additives.
In addition it was observed that the antistatic (B) always exerts its action while the conventional antifog additives based on glycerol esters such as Sabofog TGS (polyglycerol stearate), Atmer 120, Atmer 1440, or another type such as Sabofog MS (sorbitan stearate) very often do not exert their antifog action (generally in 15% of cases) or they exert it late.

Moreover, when said antifog additives Sabofog TGS (polyglycerol stearate) and Sabofog MS (sorbitan stearate) are used in a mixture with the present antistatic additive (B), the antifog effect is always obtained in all cases.

## Claims

1. Use of a compound of formula (I) 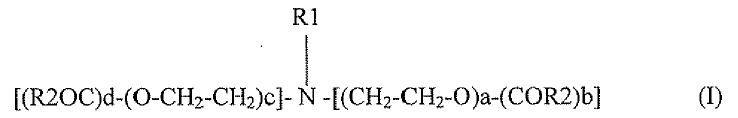 in which R1 is a C10-C20 group
a, c, equal or different from each other, range from 1 to 2; b, d, equal or different from each other, range from 0 to 1
with the condition that the sum (a+c) ranges from 2 to 4 and the sum (b+d) ranges from 1 to 2 and that when b or d is equal to 0, an atom H is in the place of the absent group (COR2),
R2 is a C 10-C20 group,
as an additive to impart antifog properties to polymers, preferably polyolefins, suited for the preparation of films.

2. A fog-resistant polyolefin composition comprising:
(A) a polyolefin;
(B) at least one compound of formula (I) as defined in claim 1.

3. The fog-resistant polyolefin composition according to claim 2 comprising also: another compound selected from
(C) a compound of formula
R3-O-(CH₂-CH₂-O)c-H (II)
in which R3 is a group from C12 to C24, linear or branched, c ranges from 1 to 20,
or
(D) a compound of formula
R4-COO-(CH₂-CH₂-O)d-H (III)
in which R4 is C11- C23 group
d ranges from 1 to 20.

4. The composition according to claim 3 in which the polyolefin is polyethylene.

5. The composition according to any one of the claims 3-4 wherein the component (B) is present from about 0.1% to about 4%, the component (C) or (D) is present from about 0.1% to about 4%, with respect to the weight of the composition, and wherein the ratio of the component (B) to the component (C) or (D) varies from 1 to 9 or from 9 to 1.

6. The composition according to any one of the claims 3-5 further comprising also antifog additives selected from sorbitan esters, alkoxylated phenols, mixtures of mono-, di- and tri-glycerides, fatty acids esters of polyhydroxy alcohols, and other polyalkoxylated compounds.

7. The composition according to any one of the claims 3-6 including also, in quantities less than or equal to 5%, various conventional stabilisers and co-additives, chosen among antioxidants, light stabilisers such as HALS (NH, NOR or of the N-methyl type) or of Ni-Quencher type; UVA absorbers such as benzotriazole, benzophenone, oxyanilide or hydroxyphenyltriazine; phosphates or phosphonites; hydroxylamines and antiacids (stearates, oxides or hydrotalcites); preferably in quantities from 0.05% to 5%, more preferably from 0.1% to 3%.

8. The composition according to any one of the claims from 3 to 7 in the form of a fog-resistant polyolefin film, preferable greenhouse film.

9. The fog-resistant polyolefin composition as defined in claim 2 in the form of a film for packaging moist products, said polyolefin (A) preferably being polypropylene.

10. The composition according to claim 9 in which the compound (B) is contained in quantities from about 0.1% to about 1.5%, preferably between 0.5% and 0.9% with respect to the weight of the total composition.

11. The composition according to claim 9 or 10 comprising also other antifog additives chosen among those defined in claim 6.

12. The composition according to any one of the claims from 9 to 11 comprising also co-additives chosen among antioxidants; phosphates or phosphonites; hydroxylamines and antiacids (stearates, oxides or hydrotalcites), said co-additives being present altogether in quantities varying from 0.02% to 1% in weight, with respect to the weight of the total composition.
